(19) 

Europäisches
Patentamt
European
Patent Office
Office européen
des brevets

(11) **EP 4 572 494 A1**

(12) **EUROPEAN PATENT APPLICATION**
published in accordance with Art. 153(4) EPC

(43) Date of publication:
**18.06.2025 Bulletin 2025/25**

(21) Application number: **23852831.9**

(22) Date of filing: **31.07.2023**

(51) International Patent Classification (IPC):
*H04W 72/23* (2023.01)    *H04L 5/00* (2006.01)
*H04L 1/00* (2006.01)

(52) Cooperative Patent Classification (CPC):
**H04L 1/00; H04L 5/00; H04W 72/23**

(86) International application number:
**PCT/KR2023/011127**

(87) International publication number:
**WO 2024/034950 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100939**

(71) Applicant: **LG Electronics Inc.**
**Yeongdeungpo-gu**
**Seoul 07336 (KR)**

(72) Inventors:
• **CHOI, Seunghwan**
  **Seoul 06772 (KR)**
• **YANG, Suckchel**
  **Seoul 06772 (KR)**
• **KIM, Seonwook**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING SIGNALS IN WIRELESS COMMUNICATION SYSTEM**

(57)    A method and device for transmitting and receiving signals in a wireless communication system disclosed in the present application transmit and receive DCI used for scheduling of multiple channels in multiple cells with one channel per cell. The DCI includes information indicating a specific scheduled cell set among the one or more scheduled cell sets.

【FIG. 4】

EP 4 572 494 A1

## Description

[Technical Field]

The present disclosure relates to a method and apparatus for use in a wireless communication system

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

[Disclosure]

[Technical Problem]

The object of the present disclosure is to provide a signal transmission and reception method for efficiently transmitting and receiving control and data signals in a wireless communication system and apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

The present disclosure provides a method and apparatus for transmitting and receiving a signal in a wireless communication system.
In one aspect of the present disclosure, a method of transmitting and receiving signals by a user equipment (UE) in a wireless communication system includes configuring one or more scheduled cell sets based on a radio resource control (RRC) parameter, receiving downlink control information (DCI) used for scheduling of multiple channels in multiple cells with one channel per cell, the DCI including information indicating a specific scheduled cell set among the one or more scheduled cell sets; and transmitting or receiving the multiple channels on all or part of cells included in the specific scheduled cell set.
In another aspect of the present disclosure, a method of transmitting and receiving signals by a base station (BS) in a wireless communication system includes transmitting a radio resource control (RRC) parameter for configuring one or more scheduled cell sets; transmitting downlink control information (DCI) used for scheduling of multiple channels in multiple cells with one channel per cell, the DCI including information indicating a specific scheduled cell set among the one or more scheduled cell sets; and transmitting or receiving the multiple channels on all or part of cells included in the specific scheduled cell set.
In another aspect of the present disclosure, an apparatus, a processor and a storage medium for performing the signal receiving method are provided. In addition, in another aspect of the present disclosure, an apparatus, a processor and a storage medium for performing the signal transmitting method are provided.
The apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

[Advantageous Effects]

According to one embodiment of the present disclosure, when control and data signals are transmitted and received between communication devices, the signals may be transmitted and received more efficiently based on operations different from those in the prior art.
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates a radio frame structure.
FIG. 2 illustrates a resource grid during the duration of a slot.
FIG. 3 illustrates a self-contained slot structure.
FIG. 4 is diagrams illustrating methods for transmitting and receiving a signal according to the embodiments of the present disclosure.
FIGS. 5 to 8 illustrate devices according to an embodiment of the present disclosure.

[Mode for Disclosure]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

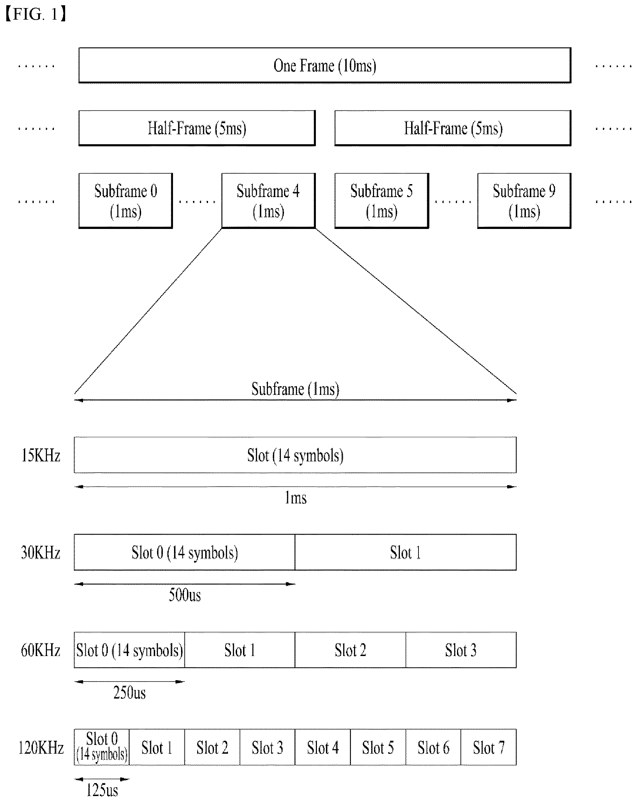

FIG. 1 illustrates a radio frame structure used for NR.
In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).
Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

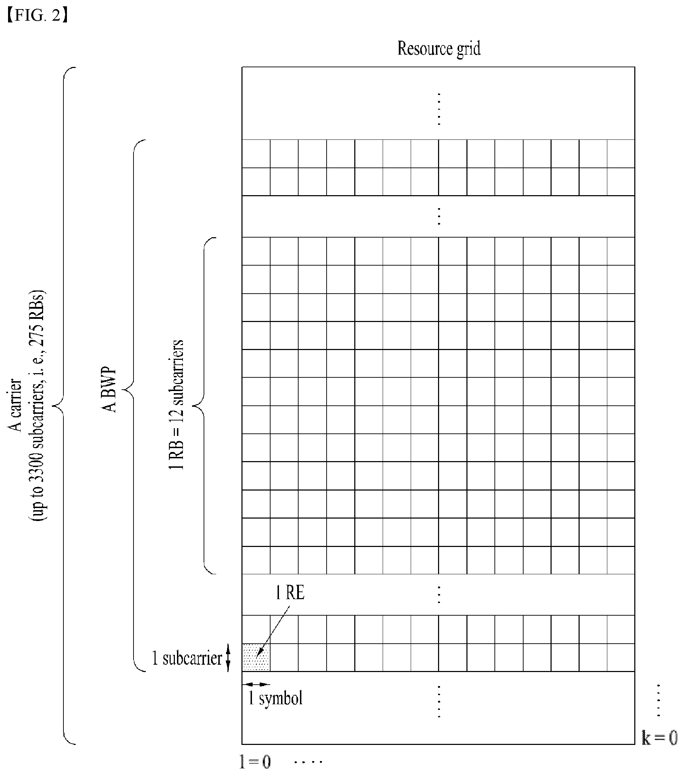

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs $\{m, M+m, 2M+m, 3M+m,...\}$. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

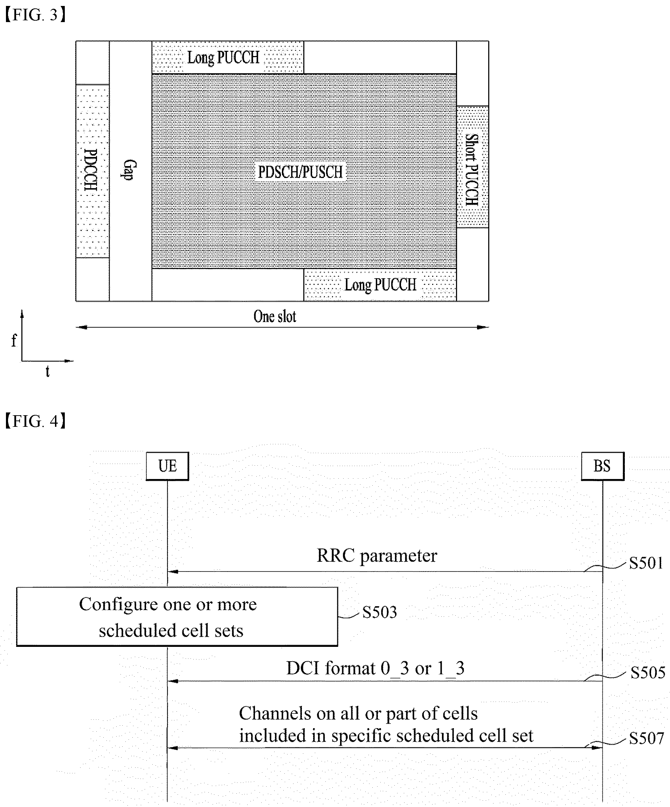

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |

(continued)

| DCI format | Usage |
|---|---|
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI MCS(Modulation and Coding Scheme)-C-RNTI | Dynamically scheduled unicast transmission | UL-SCH |
| C-RNTI | Dynamically scheduted unicast transmission | DL-SCH |
| MCS-C-RNTI | Dynamically scheduled unicast transmission | DL-SCH |
| C-RNTI | Trigerring of PDCCH ordered random access | NA |
| CS(Configued Scheduling)-RNTI | Configured scheduled unicast transmission (activation, reactivation and retransmission) | DL-SCH, UL-SCH |
| CS-RNTI | Configured scheduled unicast transmiss on (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption m DL | NA |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a pnmary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI. MCS-C-RNTI or CS-RNTI | UE signaling (e.g., PDSCH PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

## DCI for scheduling PDSCHs or PUSCHs on multiple serving cells

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In Rel-18, to reduce DCI overhead required for PDSCH/PUSCH scheduling, in Rel-18 in a carrier aggregation (CA) scenario where a plurality of cells are configured, a multi-cell scheduling (multi-CC scheduling) method of scheduling multiple serving cells/CCs simultaneously with a single piece of DCI may be considered (based on the justification shown in Table 7). In the present disclosure, the expression 'scheduling of multiple cells' may be understood as 'scheduling of a PDSCH or PUSCH to be transmitted in each of multiple cells.' In other words, multi-cell DCI is DCI used to schedule PDSCHs or PUSCHs on different cells.

Table 7 may be understood as a justification for supporting such DCI in Rel-18, serving as one of the motivations for the introduction of the DCI (PDCCH).

[Table 7]

| Excerpted from RP-220834 |
| --- |
| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network. |
| One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account. |

Accordingly, the present disclosure proposes a method for monitoring a PDCCH for DCI (multi-cell DCI) for performing the multi-cell scheduling as well as a method for configuring associated PDCCH candidates.

In the proposed methods described below, for convenience of explanation, DCI for performing multi-cell scheduling is denoted as m-cc DCI, and DCI for performing conventional single-cell scheduling is denoted as s-cc DCI. In addition, DCI scheduling a PDSCH and DCI scheduling a PUSCH are collectively referred to as m-cc DCI or s-cc DCI without differentiation. In some cases, the scheduled PDSCH and/or PUSCH may be referred to as a PDSCH/PUSCH (or PxSCH).

In the present disclosure, the term 'cell' may be interpreted according to the context. For example, a cell may refer to a serving cell. In addition, a cell may be composed of one DL component carrier (CC) and one to two UL CCs, but the methods described later are not limited to this configuration. In the following, unless otherwise specified, the terms 'cell' and 'CC' may be used interchangeably. Also, a cell/CC may be substituted and applied as an (active) BWP within a serving cell. Furthermore, unless otherwise specified, the term 'cell/CC' in the methods described later may be used as a concept encompassing a primary cell (PCell), a secondary cell (SCell), primary SCell (PSCell), etc., which may be configured/expressed in CA/DC (dual connectivity) scenarios.

A cell (or CC) that schedules a PDSCH/PUSCH (DL assignment or UL grant) may be referred to as a scheduling cell (or scheduling CC). A cell where the PDSCH/PUSCH scheduled through the scheduling cell is actually transmitted may be referred to as a scheduled cell (or scheduled CC). When the scheduling cell and the scheduled cell are the same, it is called self-carrier scheduling, and when the scheduling cell and the scheduled cell are different, it is referred to as cross-carrier scheduling.

Tables 8 and 9 illustrate information elements (IEs) related to cross-carrier scheduling specified in 3GPP TS 38.331.

[Table 8]

```
–                    CrossCarrierSchedulingConfig

The IE CrossCarrierSchedulingConfig is used to specify the configuration when the cross-carrier scheduling is used in a cell.
                              CrossCarrierSchedulingConfig information element
-- ASN1START
-- TAG-CROSSCARRIERSCHEDULINGCONFIG-START


CrossCarrierSchedulingConfig ::=        SEQUENCE {
    schedulingCellInfo              CHOICE {
        own                     SEQUENCE {          -- Cross carrier scheduling: scheduling cell
            cif-Presence                BOOLEAN
        },
        other                   SEQUENCE {          -- Cross carrier scheduling: scheduled cell
            schedulingCellId            ServCellIndex,
            cif-InSchedulingCell            INTEGER (1..7)
        }
    },
    ...,
    [[
    carrierIndicatorSize-r16        SEQUENCE {
        carrierIndicatorSizeDCI-1-2-r16        INTEGER (0..3),
        carrierIndicatorSizeDCI-0-2-r16        INTEGER (0..3)
    }                                       OPTIONAL,  -- Cond CIF-PRESENCE
    enableDefaultBeamForCCS-r16        ENUMERATED {enabled}                OPTIONAL  -- Need S
    ]],
    [[
    ccs-BlindDetectionSplit-r17        ENUMERATED {oneSeventh, threeFourteenth, twoSeventh, threeSeventh,
                            oneHalf, fourSeventh, fiveSeventh, spare1}     OPTIONAL  -- Need R
    ]]
}


-- TAG-CROSSCARRIERSCHEDULINGCONFIG-STOP
-- ASN1STOP
```

[Table 9]

| CrossCarrierSchedulingConfig field descriptions |
| --- |
| cif-Presence<br>The field is used to indicate whether carrier indicator field is present (value true) or not (value false) in PDCCH DCI formats, see TS 38.213 [13]. If cif-Presence is set to true, the CIF value indicating a grant or assignment for this cell is 0. |
| cif-InSchedulingCell<br>The field indicates the CIF value used in the scheduling cell to indicate a grant or assignment applicable for this cell, see TS 38.213 [13]. |
| other |

(continued)

| CrossCarrierSchedulingConfig field descriptions |
|---|
| Parameters for cross-carrier scheduling, i.e., a serving cell is scheduled by a PDCCH on another (scheduling) cell. The network configures this field only for SCells. |
| own<br>Parameters for self-scheduling, i.e., a serving cell is scheduled by its own PDCCH. |
| schedulingCellId<br>Indicates which cell signals the downlink allocations and uplink grants, if applicable, for the concerned SCell. In case the UE is configured with DC, the scheduling cell is part of the same cell group (i.e. MCG or SCG) as the scheduled cell. |

In the NR system, a cross-carrier scheduling (CCS) configuration may be configured by a higher layer parameter, CrossCarrierSchedulingConfig as shown in Tables 8 and 9. For DCI that schedules a PDSCH or PUSCH (e.g., DCI format 0_1/0_2/1_1/1_2) a carrier indicator field (CIF) value is configured. This value becomes 0 for its own cell and ranges from 1 to 7 for other cells (configured by cif-InSchedulingCell). Additionally, as shown in Table 10, a configured CIF value corresponds to the value of n_CI and is used for determining PDCCH candidates. In this case, PDCCH monitoring corresponding to a search space set (SS set) configured for a scheduled cell is performed at a PDCCH monitoring occasion (MO) associated with an SS set having the same index as the SS set in a scheduling cell. In addition, the number of PDCCH candidates for each aggregation level (AL) configured in the SS set of the scheduled cell is inherited as it is, and the same number of PDCCH candidates is applied during PDCCH monitoring on the scheduled cell based on the corresponding SS set in the scheduling cell. The PDCCH MO may be determined for each SS set s within a CORESET p. Up to 10 SS sets may be associated with a single CORESET, and each SS set may be identified by the SS set index.

[Table 10]

| |
|---|
| For each DL BWP configured to a UE in a serving cell, the UE is provided by higher layers with S=<10 search space sets where, for each search space set from the S search space sets, the UE is provided the following by *SearchSpace :*<br>- a PDCCH monitoring periodicity of $k_s$slots and a PDCCH monitoring offset of $o_s$slots, by *monitoringSlotPeriodicityAndOffset* or by *monitoringSlotPeriodicityAndOffset-r17*<br>- a PDCCH monitoring pattern within a slot, indicating first symbol(s) of the CORESET for PDCCH monitoring within each slot where the UE monitors PDCCH, by *monitoringSymbolsWithinSlot*<br>- a duration of $T_s< k_s$ indicating a number of slots that the search space set s exists by *duration*, or a number of slots in consecutive groups of slots where the search space set s can exist by *duration-r17*<br>A UE determines a PDCCH monitoring occasion on an active DL BWP from the PDCCH monitoring periodicity, the PDCCH monitoring offset, and the PDCCH monitoring pattern within a slot. If *monitoringSlotsWithinSlotGroup* is not provided, the UE determines that PDCCH monitoring occasions exist in a slot with number $n_{s,f}^\mu$ [4, TS 38.211] in a frame with number $n_f$ if $(n_f\, N_{slot}^{frame,\mu}+ n_{s,f}^\mu - o_s)\, \mathrm{mod}\, k_s = 0$. The UE monitors PDCCH candidates for search space set *s* for $T_s$ consecutive slots, starting from slot $n_{s,f}^\mu$, and does not monitor PDCCH candidates for search space set *s* for the next $k_s - T_s$ consecutive slots. If *monitoringSlotsWithinSlotGroup* is provided, for search space set s, the UE determines that the slot with number $n_{s,f}^\mu$ [4, TS 38.211] in a frame with number $n_f$ satisfying $(n_f\, N_{slot}^{frame,\mu}+ n_{s,f}^\mu - o_s)\, \mathrm{mod}\, k_s = 0$ is the first slot in a first group of $L_s$ slots and that PDCCH monitoring occasions exist in $T_s/L_s$ consecutive groups of slots starting from the first group, where $L_s$ is the size of *monitoringSlotsWithinSlotGroup.* The UE monitors PDCCH candidates for search space set *s* within each of the $T_s/L_s$ consecutive groups of slots according to *monitoringSlotsWithinSlotGroup,* starting from slot $n_{s,f}^\mu$, and does not monitor PDCCH candidates for search space set *s* for the next $k_s - T_s$ consecutive slots.<br>For a search space set *s* associated with CORESET *p*, the CCE indexes for aggregation level L corresponding to PDCCH candidate $m_{s,n_{CI}}^{(L)}$ of the search space set in slot $n_{s,f}^\mu$ for an active DL BWP of a serving cell corresponding to carrier indicator field value $n_{CI}$ are given by |

(continued)

$$L \cdot \left\{ \left( Y_{p,n_{s,f}^{\mu}} + \left\lfloor \frac{m_{s,n_{CI}}^{(L)} \cdot N_{CCE,p}}{L \cdot M_{s,\max}^{(L)}} \right\rfloor + n_{CI} \right) \mod \left\lfloor N_{CCE,p}/L \right\rfloor \right\} + i$$

where

for any CSS, $Y_{p,n_{s,f}^{\mu}} = 0$ ;

for a USS, $Y_{p,n_{s,f}^{\mu}} = \left( A_p \cdot Y_{p,n_{s,f}^{\mu}-1} \right) \mod D$ , $Y_{p-1} = n_{RNTI} \neq 0$ , $A_p = 39827$ for $p \mod 3 = 0$ , $A_p = 39829$ for $p \mod 3 = 1$, $A_p = 39839$ for $p \mod 3 = 2$, and D = 65537;

$i = 0, \cdots, L - 1$;

$N_{CCE,p}$ is the number of CCEs, numbered from 0 to $N_{CCE,p}$ - 1, in CORESET $p$ and, if any, per RB set;

$n_{CI}$ is the carrier indicator field value if the UE is configured with a carrier indicator field by *CrossCarrierScheduling-Config* for the serving cell on which PDCCH is monitored, except for scheduling of the serving cell from the same serving cell in which case $n_{CI}$ = 0; otherwise, including for any CSS, $n_{CI}$ = 0; $m_{s,n_{CI}}^{(L)} = 0, \cdots, M_{s,n_{CI}}^{(L)} - 1$

, where $M_{s,n_{CI}}^{(L)}$ is the number of PDCCH candidates the UE is configured to monitor for aggregation level L of a search space set *s* for a serving cell corresponding to $n_{CI}$ ;

for any CSS, $M_{s,\max}^{(L)} = M_{s,0}^{(L)}$ ;

for a USS, $M_{s,\max}^{(L)}$ is the maximum of $M_{s,n_{CI}}^{(L)}$ over all configured $n_{CI}$ values for a CCE aggregation level L of search space set *s* ;

the RNTI value used for $n_{RNTI}$ is the C-RNTI.

For example, SS set #s may be configured as follows for cell #1 and cell #2.

- SS set #s configured for cell #1: The number of PDCCH candidates for a specific AL n is set to N_1(n).
- SS set #s configured for cell #2: The number of PDCCH candidates for a specific AL n is set to N_2(n).

In this case, if cross-carrier scheduling is configured such that cell #1 is determined as the scheduling cell for cell #2, the UE may perform monitoring of PDCCHs at the PDCCH MOs configured in SS set #s on cell #1 as follows. Specifically, a PDCCH transmitted on cell #1 may schedule data transmitted on cell #2 (e.g., PDSCH or PUSCH). The relationship established between cell #1 and cell #2 as described above may conveniently be referred to as a CCS relationship. Additionally, monitoring PDCCHs may imply monitoring PDCCH candidates.

- For DCI formats configured in SS set #s of cell #1, N_1(n) PDCCH candidates are monitored for each AL n.
- For DCI formats configured in SS set #s of cell #2, N_2(n) PDCCH candidates are monitored for each AL n.

For the methods described below, the proposed/calculated values in each method (e.g., the number of PDCCH candidates for each scheduled cell, blind detection (BD) counting method, BD budget, or multiplication or division of a specific value to apply weights) may result in integer values as the final results using the ceil or floor functions (unless otherwise specified)

[1] BD budget sharing (BD budget distribution) for s-cc DCI and m-cc DCI

[1-1] K scheduled cells scheduled simultaneously with m-cc DCI (or corresponding to the entire cell set that may be scheduled with m-cc DCI) are represented as {{cell#k}, K} = {cell#1, cell#2, ..., cell#K}. The entire cell set that may be scheduled with m-cc DCI is referred to as all scheduled cells. Each scheduled cell (e.g., cell#k) may be scheduled with s-cc DCI or m-cc DCI. In this case, the UE needs to perform monitoring (e.g., blind decoding) on both s-cc DCI and m-cc DCI simultaneously. The number of times of possible BD of the s-cc DCI and m-cc DCI for each scheduled cell may be set through RRC or the like. However, to reduce the monitoring burden on the UE, the maximum number of monitoring attempts (or BD counts) for individual scheduled cells for a specific time (e.g., 1 slot) may be limited not to exceed a specific value. Therefore, it may be necessary to readjust the BD counting number for m-cc DCI and/or s-cc DCI.

[1-2] The number of PCs where s-cc DCI may be monitored for cell#k is denoted by BD_single(k). The number of PCs where m-cc DCI may be monitored for cell#k is denoted by BD_multi(k). The maximum BD counting number set for cell#k is denoted by BD_limit(k). Alternatively, in the proposed method discussed later, BD_single(k) may denote the BD counting number for s-cc DCI monitoring for cell#k. Additionally, BD_multi(k) may denote the BD counting number for m-cc DCI monitoring for cell#k. PC refers to the number of PDCCH candidates configured per aggregation level (AL) for each cell.

[1-3] In the proposed method discussed later, BD_single(k) may denote the sum of BD counting numbers (or PC counts) for monitoring fallback DCI (e.g., DCI format 1_0 and/or 0_0) and non-fallback DCI (e.g., DCI format 1_1 and/or 0_1) among legacy DCIs. Alternatively, BD_single(k) may denote only the BD counting number (or PC count) for monitoring non-fallback DCI for the cell.

[1-4] beta_multi and/or beta_single may be set to satisfy the following equation for cell#k.

$$(\text{Equation 1-4-1}) \ beta\_multi * BD\_multi(k) + beta\_single * BD\_single(k) <= BD\_limit(k)$$

Here, beta_multi and beta_single refer to specific values (non-negative real numbers, e.g., 1 or 0 or 0.5) that may be predefined or set through RRC or the like. They may ensure that when monitoring for s-cc DCI and monitoring for m-cc DCI are performed simultaneously for a specific scheduled cell#k, the total number of BD attempts for the cell is kept less than or equal to a specific number (e.g., BD_limit(k)). In the equation above, a specific value (=K1) may be used instead of BD_limit(k), which is predefined for each cell.

$$[112] \qquad (\text{Equation 1-4-2}) \ beta\_multi * BD\_multi(k) + beta\_single * BD\_single(k) <= K1$$

Here, K1 may be predefined or set through RRC or the like. K1 may be a different value than BD_limit(k) (e.g., greater than BD_limit(k)).

In the proposed method above, the monitoring count for m-cc DCI for cell#k may be beta_multi*BD_multi(k), and the monitoring count for s-cc DCI may be beta_single*BD_single(k).

[1-5] As an alternative to [1-4], beta_multi and/or beta_single may be set to satisfy the following equation for cell#k.

$$\underline{(\text{Equation 1-5-1})} \ beta\_multi * sum[BD\_multi(k)] + beta\_single * sum[BD\_single(k)] <= sum[BD\_limit(k)]$$

Here, beta_multi and beta_single refer to specific values (non-negative real numbers, e.g., 1 or 0 or 0.5) that may be predefined or set through RRC or the like. Also, sum[ ] denotes the sum for all co-scheduled cells scheduled simultaneously with m-cc DCI. Alternatively, sum[ ] denotes the sum for the entire cell set that may be scheduled with m-cc DCI. Depending on the elements in sum[ ], the sum of BD_multi(k), BD_single(k), or BD_limit(k) for each cell is derived. This may ensure that when monitoring for s-cc DCI and monitoring for m-cc DCI are performed simultaneously for a specific scheduled cell#k, the total number of BD attempts for the cell is kept less than or equal to a specific number (e.g., sum[BD_limit(k)]). In the equation above, a specific value (=K1_sum) may be used instead of sum[BD_limit(k)], which is predefined for each cell.

$$(\text{Equation 1-5-2}) \ beta\_multi * sum[BD\_multi(k)] + beta\_single * sum[BD\_single(k)] <= K1\_sum$$

Here, K1_sum may be predefined or set through RRC or the like. K1_sum may be a different value than sum[BD_limit(k)] (e.g., greater than sum[BD_limit(k)]). In the proposed method above, the monitoring count for m-cc DCI for cell#k may be beta_multi*BD_multi(k). The monitoring count for s-cc DCI may be beta_single*BD_single(k).

Additionally, this method may be applied as follows:

- When the number of PDCCH candidates (or BD counting) for m-cc DCI is set/determined for all scheduled cells, sum[BD_multi(k)] may be "specific set value (=BD_multi_all)." sum[BD_single(k)] and sum[BD_limit(k)] may refer to the summation for all scheduled cells.
- When the number of PDCCH candidates (or BD counting) for m-cc DCI is set/determined per scheduled cell, sum[BD_multi(k)] may be "the value of BD_single(k) for the cell". sum[BD_single(k)] and sum[BD_limit(k)] may refer to the values set for the k-th cell.

- sum[BD_multi(k)] may be "N times BD_single(k) (where N is the number of co-scheduled cells or all scheduled cells)", and the sum of sum[BD_single(k)] and sum[BD_limit(k)] may refer to the applied values for a combination of co-scheduled cells or the set of all scheduled cells.

- When the number of PDCCH candidates (or BD counting) for m-cc DCI is set/determined per combination of co-scheduled cells scheduled simultaneously with the same m-cc DCI, sum[BD_multi(k)] may be "a specific set value (=BD_multi_comb)". The sum of sum[BD_single(k)] and sum[BD_limit(k)] may refer to the applied values for the co-scheduled cell combination.

[1-6] As an alternative to [1-4], beta_multi and/or beta_single may be set to satisfy the following equation for cell#k.

$$\text{(Equation 1-6-1)} \; BD\_multi(k) <= beta\_multi * BD\_limit(k)$$

$$\text{(Equation 1-6-2)} \; BD\_single(k) <= beta\_single * BD\_limit(k)$$

Here, beta_multi and beta_single refer to specific values (non-negative real numbers, e.g., 1 or 0 or 0.5) that may be predefined or set through RRC or the like. This may ensure that when monitoring for s-cc DCI and monitoring for m-cc DCI are performed simultaneously for a specific scheduled cell#k, the total number of BD attempts for the cell is kept less than or equal to a specific number (e.g., BD_limit(k)). In the equation above, a specific value (=K2) may be used instead of BD_limit(k), which is predefined for each cell.

$$\text{(Equation 1-6-3)} \; BD\_multi(k) <= beta\_multi * K2$$

$$\text{(Equation 1-6-4)} \; BD\_single(k) <= beta\_single * K2$$

Here, K2 may be predefined or set through RRC or the like. K2 may be a different value than BD_limit(k) (e.g., greater than BD_limit(k)). In the proposed method above, the monitoring count for m-cc DCI for cell#k may be BD_multi(k). The monitoring count for s-cc DCI may be BD_single(k).

[1-7] As an example of [1-4], [1-5], and [1-6], by setting beta_single to 1 (or 0) and beta_multi to a value in the range of 0 to 1, the monitoring count set for the m-cc DCI may be reduced such that that it does not exceed BD_limit for each scheduled cell. In this case, the reduction of the set monitoring count refers to a method by which the UE monitors PDCCH candidates whose number (e.g., beta_multi*BD_multi(k)) is smaller than the number of PDCCH candidates (e.g., BD_multi(k)) set for cell#k for the m-cc DCI monitoring. In this case, the UE may be regulated to prioritize monitoring PDCCH candidates with relatively low indexes (or indexes less than or equal to a specific value) for the m-cc DCI and skip (drop) monitoring of specific PDCCH candidates with relatively high indexes (or indexes greater the specific value).

[1-8] As another example of [1-4], [1-5], and [1-6], by setting beta_multi to 1 (or 0) and beta_multi to a value in the range of 0 to 1, the monitoring count set for the s-cc DCI may be reduced such that that it does not exceed BD_limit for each scheduled cell. In this case, the reduction of the set monitoring count refers to a method by which the UE monitors PDCCH candidates whose number (e.g., beta_single*BD_single(k)) is smaller than the number of PDCCH candidates (e.g., BD_single(k)) set for cell#k for the s-cc DCI monitoring. In this case, the UE may be regulated to prioritize monitoring PDCCH candidates with relatively low indexes (or indexes less than or equal to a specific value) for the s-cc DCI and skip (drop) monitoring of a specific PDCCH candidate with relatively high index (or index greater the specific value).

[1-9] One of the following conditions may also be applied to [1-4], [1-5], and [1-6].

$$\text{(Equation 1-7-1)} \; BD\_multi(k) + BD\_single(k) <= BD\_limit(k)$$

$$\text{(Equation 1-7-2)} \; BD\_multi(k) + BD\_single(k) <= K3$$

$$\text{(Equation 1-7-3)} \; BD\_multi(k) + BD\_single(k) = 1$$

$$\text{(Equation 1-7-4)} \; BD\_multi(k) + BD\_single(k) = K4$$

Here, K3 and K4 may be predefined or set through RRC or the like.

[1-10] In the proposed method described above, a cell-specific weight may be assigned to each scheduled cell for m-cc scheduling according to the number (or proportion) of co-scheduled cell sets that include the cell. For example, when the combination of co-scheduled cells that may be scheduled with m-cc DCI is {cell#1, cell#2} or {cell#2, cell#3}, the set value of BD_multi (or beta_multi) for cell#2 may be twice or half the value set for cell#1 and/or cell#3.

## [2] A case where a specific PDCCH candidate is not counted as monitoring

The monitoring of PDCCH candidates for s-cc DCI may not be counted as monitoring under the following conditions.

Table 11 is a part of the 3GPP TS 38.213 document.

[Table 11]

A PDCCH candidate with index $m^{(L)}_{s_j,n_{CI}}$ for a search space set $s_j$ using a set of $L$ CCEs in a CORESET $p$ on the active DL BWP for serving cell $n_{CI}$ is not counted for monitoring if there is a PDCCH candidate with index $m^{(L)}_{s_i,n_{CI}}$ for a search space set $s_i < s_j$, or if there is a PDCCH candidate with index $n^{(L)}_{s_i,n_{CI}}$ and $n^{(L)}_{s_j,n_{CI}} < m^{(L)}_{s_j,n_{CI}}$, in the CORESET P on the active DL BWP for serving cell $n_{CI}$ using a same set of $L$ CCEs, the PDCCH candidates have identical scrambling, and the corresponding DCI formats for the PDCCH candidates have a same size; otherwise, the PDCCH candidate with index $m^{(L)}_{s_j,n_{CI}}$ is counted for monitoring.

Referring to Table 11, a PDCCH candidate (=m_j) for an SS set (=s_j) of a specific cell (=n_CI) is not counted as additional monitoring if it meets a specific condition for the same cell (=n_CI) (i.e., when an SS/PC with the same CORESET CCEs, DCI size, and identical scrambling is configured).

This operation may be similarly applied to PDCCH candidates for m-cc DCI. That is, PDCCH candidates for m-cc DCI for the same set of co-scheduled (or schedulable) cell combination may not be counted as additional monitoring when the following specific conditions are met.

The same set of co-scheduled (or schedulable) cell combination may refer to the same co-scheduled cell combination when the combination of cells co-scheduled with the same m-cc DCI is defined as a co-scheduled cell combination, or any co-scheduled cell combination belonging to the same schedulable cell combination when the entire cell set schedulable with the same m-cc DCI is defined as a schedulable cell set.

In other words, two or more PDCCH candidates for m-cc DCI for the same set of co-scheduled (or schedulable) cell combination may be counted as one monitoring when the following specific condition is met.

The specific condition may be a combination of one or more of the followings.

- The scheduling cells of two PDCCH candidates for m-cc scheduling are the same;
- The CORESETs of the two PDCCH candidates are the same
- The two PDCCH candidates are SS sets configured in the same set of L (= AL) CCEs
- The DCI sizes of the two PDCCH candidates are the same
- Identical scrambling is used in the DCI decoding process for the two PDCCH candidates

## [3] Method for configuring the maximum cell group that can be scheduled at one time through m-cc DCI and configuring an SS set for each group

A co-schedulable cell group that may be scheduled simultaneously through m-cc DCI may be preconfigured, an SS set may be configured for each group, and BD counting and DCI size may be determined per group.

[3-1] A co-schedulable cell group may be separately configured through RRC. In the preset disclosure, a co-schedulable cell group may be represented as a scheduled cell set or a combination of scheduled cells. The group index may be indicated through m-cc DCI. That is, a scheduled cell set may be indicated through this DCI. Also, a list of cell(s) actually being scheduled among the cell(s) in the group may be indicated through this DCI. In other words, cell(s) on which a PUSCH is to be actually transmitted or a PDSCH is to be received among the cell(s) belonging to the scheduled cell set may be indicated through the DCI.

For example, the co-schedulable cell groups may be configured as group_1 = {cell#1, cell#2}, group_2 = {cell#3, cell#4}, group_3 = {cell#1, cell#2, cell#3}, etc., through RRC. One of the configured groups may be scheduled through m-cc DCI. If group_1 is scheduled through m-cc DCI, the m-cc DCI may include an indicator indicating group_1. Also, the m-cc DCI may indicate a cell (or cell combination) in which PUSCH or PDSCH is scheduled among the cells included in group_1. For example, when group_1 is indicated, the cells co-scheduled through the m-cc DCI may be one of {cell#1}, {cell#2}, or {cell#1, cell#2}. When group_2 is indicated, the cells co-scheduled through the m-cc DCI may be one of {cell#3}, {cell#4}, or {cell#3, cell#4}.

The name of the RRC parameter indicating the scheduled cell set may be, for example, MC-DCI-SetofCellsToAddModList. The RRC parameter may be a list of up to N (N<=4) configurations of set(s) of cells for multi-cell PDSCH/PUSCH scheduling from the serving cell, where N may be reported as UE capability and up to 4 sets of cells can be configured per PUCCH group. The set(s) of cells for multi-cell PDSCH/PUSCH scheduling may refer to a set of scheduled cells (or a scheduled cell set) through which PDSCH/PUSCH is scheduled through multi-cell PDSCH/PUSCH scheduling.

Also, the RRC parameter indicating the scheduled cell set may be configured per scheduling cell and may be UE-specifically configured.

Table 12 shows the relationship between the bit field value of the indicator included in the DCI and the scheduled cell set. The indicator indicating the scheduled cell set may be referred to as a scheduled cell set indicator. The scheduled cell set indicator must indicate one of the groups indicated by the RRC parameter, and thus the bit number may be determined based on the number of groups set by the RRC parameter. For example, when the number of cell sets set by the RRC parameter is N_set, the bit number of the scheduled cell set indicator may be ceil(log$_2$(N_set)). The cell used for actual channel reception or transmission among the cells included in the indicated scheduled cell set is referred to as a scheduled cell. The scheduled cell may be indicated by a scheduled cell indicator separate from the scheduled cell set indicator.

[Table 12]

| Bit field mapped to index | Scheduled cell set |
| --- | --- |
| 0 | The cell set configured by the 1st entry in MC-DCI-SetofCellsToAddModList |
| 1 | The cell set configured by the 2nd entry in MC-DCI-SetofCellsToAddModList |
| 2 | The cell set configured by the 3rd entry in MC-DCI-SetofCellsToAddModList, if any |
| 3 | The cell set configured by the 4th entry in MC-DCI-SetofCellsToAddModList, if any |

[3-2] Regarding [3-1] described above, when a specific cell (=ref_cell) is specified among the cells belonging to a specific group, the BD counting and/or DCI size counting for the m-cc DCI that schedules all or part of the cells in the group may be performed only for ref_cell. For example, in the case where ref_cell of group_1 is set to cell#1, the BD counting and/or DCI size counting may be applied to cell#1 when {cell#1} is scheduled, {cell#2} is scheduled, or {cell#1, cell#2} is scheduled through m-cc DCI.

[3-3] Regarding [3-1] described above, the same DCI size may be used for DCI that schedules all or part of the cells in the same group. For example, for group_3 mentioned in [3-1], the same DCI size may be used when scheduling only cell#1 (or cell#2 or cell#3), and scheduling {cell#2, cell#3} simultaneously, and scheduling {cell#1, cell#2, cell#3} simultaneously through m-cc DCI. The same DCI size may be determined based on the case where the co-scheduled cell is the largest (or the DCI size is the largest).

[3-4] Regarding [3-1] described above, the same SS set may be used for m-cc DCI that schedules all or part of the cells belonging to the same group. Alternatively, even if the SS set indexes are different, some same configurations may be used. For example, the same SS set (e.g., the same SS set index) may be configured for two m-cc DCIs that schedule {cell#1} and {cell#2}, which belong to the same group, respectively. In this case, the same SS set configuration may be used. In another example, different SS sets (e.g., different SS set indexes) may be used for two m-cc DCIs that schedule {cell#1} and {cell#2}, which belong to the same group, respectively, but some configurations of the two SS sets may be shared. The configurations that may be shared may include the number of PCs per AL, configurations related to monitoring occasions such as periodicity/offset/duration, CIF value, and n_CI value.

[3-5] Regarding [3-1] described above, the monitoring BD counting may be counted as one for m-cc DCI that schedules all or part of the cells belonging to the same group. For example, when two m-cc PDCCHs for scheduling {cell#1} and {cell#2} belonging to the same group, respectively, are monitored in the same slot, the BD for the two PDCCHs may be counted only once.

As an embodiment of [3-1] to [3-5] above, when the entire set of scheduled cells (configured for a specific UE) that may be scheduled with m-cc DCI consists of 8 cells (#1 to #8), the m-cc DCI of a specific scheduling cell (#A) may only have a subset of {cell#1, #2} as a scheduled cell. Additionally, the m-cc DCI of another scheduling cell (#B) may only have a subset of {cell#3, #4, #5, #6, #7, #8} as scheduled cells. That is, when cell#A and cell#B (different from cell#A) are scheduling cells for m-cc DCI, different sets of co-schedulable scheduled cells may be configured therefor. For example, for a scheduling cell belonging to FR1 and a scheduling cell belonging to FR2, different sets of scheduled cells co-schedulable through m-cc DCI may be configured. In this case, the cells (or cell combinations) belonging to the corresponding scheduled cell set may share BD counting and DCI size counting.

[4] Method to restrict legacy DCI from being configured in a specific cell among co-scheduled cells of m-cc DCI

[4-1] Legacy DCI may be restricted from being configured for at least M (where M <= N) cells among N co-scheduled cells (e.g., cell#1 to cell#N) simultaneously scheduled through m-cc DCI (or corresponding to the entire cell set that may be scheduled through m-cc DCI). In this case, the monitoring counting (i.e., BD counting) for m-cc DCI may be counted only for the M cells (or only for a specific cell selected from among the M cells). In addition, in the process of fitting within the maximum DCI size budget (for each cell), the DCI size counting for m-cc DCI may be performed only for the M cells (or only for the specific cell selected from among the M cells).
[4-2] Regarding [4-1] described above, M may be less than or equal to N. For example, M may be equal to 1 or N.
[4-3] Regarding [4-1] and [4-2] described above, the M (=1) cell may be determined/set as the scheduling cell, the cell that serves as a reference for the CIF value set in the m-cc DCI, the cell with the lowest index among the co-scheduled cells scheduled simultaneously by m-cc DCI, or the cell with the lowest index among all the scheduled cells. Alternatively, the M (=1) cell may be set through a separate RRC configuration, MAC-CE, or DCI.
[4-4] Regarding [4-1] and [4-2] described above, when M=1, the BD counting and/or DCI size count for m-cc DCI may be performed for the one cell.
[4-5] Regarding [4-1] and [4-2] described above, when M>1, the one cell described in [4-3] may be selected first, and then M consecutive cells starting from the cell may be determined as cells for which legacy DCI is not configured. Alternatively, M cells may be configured through a separate RRC configuration, MAC-CE, or DCI.
[4-6] Regarding [4-1] and [4-2] described above, when M>1, the BD counting and/or DCI size count for m-cc DCI may be divided equally (or unequally) among the M cells or applied only to one specific cell. In this case, the one specific cell may be configured through separate RRC/MAC-CE/DCI, or may be the one specific cell mentioned in [4-3] or [4-4].
[4-7] In the above-described method, having no legacy DCI configured may mean that any of fallback DCI format (e.g., DCI 0_0 or 1_0) and non-fallback DCI format (e.g., DCI 0_1 or 1_1 or 0_2 or 1_2) among legacy DCIs is configured. Alternatively, it may mean that only the non-fallback DCI format (for which cross-carrier scheduling may be configured) is not configured. Alternatively, it may mean that at least one of the fallback and non-fallback DCI formats is not configured.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.
It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

Implementation examples

FIG. 4 is diagrams illustrating methods for transmitting and receiving a signal according to embodiments of the present disclosure.
Referring to FIG. 4, a BS transmits an RRC parameter to a UE (S501). The UE configures one or more scheduled cell sets based on the received RRC parameter (S503). Subsequently, the BS transmits DCI to the UE, and the UE receives the DCI from the BS (S505). When the UE transmits multiple channels on all or part of the cells included in a specific scheduled cell set among the one or more configured scheduled cell sets based on the DCI, the BS receives the same (S507). Alternatively, the UE may receive multiple channels from the BS on all or part of the cells included in a specific scheduled cell set among the one or more configured scheduled cell sets based on the DCI (S507).
In addition to the operations of FIG. 4, the method may be performed based on one or more of the operations described in sections [1] to [4].

For example, referring to [3-1], in operation S503, the UE having one or more scheduled cell sets configured based on the RRC parameter recognizes that one of the configured scheduled cell sets may be indicated through the DCI. The DCI received by the UE from the BS may be DCI used to schedule multiple channels within multiple cells, such that each of the cells includes one channel. When the multiple channels are PUSCHs, the DCI may correspond to DCI format 0_3. When the multiple channels are PDSCHs, the DCI may correspond to DCI format 1_3. Alternatively, the DCI received by the UE from the BS may DCI used to schedule multiple channels within multiple cells, such that each of the cells includes one or more channels. When the multiple channels are PUSCHs, the DCI may correspond to DCI format 0_X. When the multiple channels are PDSCHs, the DCI may correspond to DCI format 1_X. When X is a natural number from 0 to 3, the DCI is configured by modifying the existing DCI format. When X is a natural number greater than or equal to 4, the DCI may be a newly defined DCI format.

The DCI may include information indicating a specific scheduled cell set among the one or more scheduled cell sets configured by the RRC parameter. Referring to [3-1], the information may be included in the scheduled cell set indicator.

The DCI may further include information indicating all or part of the cells on which the multiple channels are to be transmitted or received among the cells included in the indicated specific scheduled cell set. Referring to [3-1], the information may be included in the scheduled cell indicator.

Further, referring to [3-2], a specific cell (or reference cell) among the cells included in the specific scheduled cell set may be used as a basis for BD counting and DCI size counting for the DCI. Therefore, the number of time of blind decoding for the DCI may be counted based on the specific cell among the cells included in the scheduled cell set. The DCI size alignment for the DCI may be performed based on the specific cell among the cells included in the scheduled cell set. Taking the specific cell as a basis for BD counting may mean that when a maximum number of PDCCH candidates and a maximum number of non-overlapped CCEs the UE can monitor per slot are determined, the UE calculates the maximum numbers considering only the number of PDCCH candidates and non-overlapped CCEs of the specific cell among the cells included in the scheduled cell set. The same applies when the maximum number of PDCCH candidates and the maximum number of non-overlapped CCEs are defined per span or group of X_s slots instead of per slot.

Referring to [3-3], the same search space set may be used for DCI for scheduling all or part of the cells belonging to the same scheduled cell set. Therefore, in the case where the DCI and second DCI different from the DCI indicate the same specific scheduled cell set, the same search space set is configured for both the DCI and the second DCI even when the DCI and the second DCI indicate different combinations of cells among the cells included in the specific scheduled cell set.

In addition to the operations described with reference to FIG. 4, one or more of the operations described with reference to FIGS. 1 to 3 and/or the operations described in sections [1] to [4] may be combined and further performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

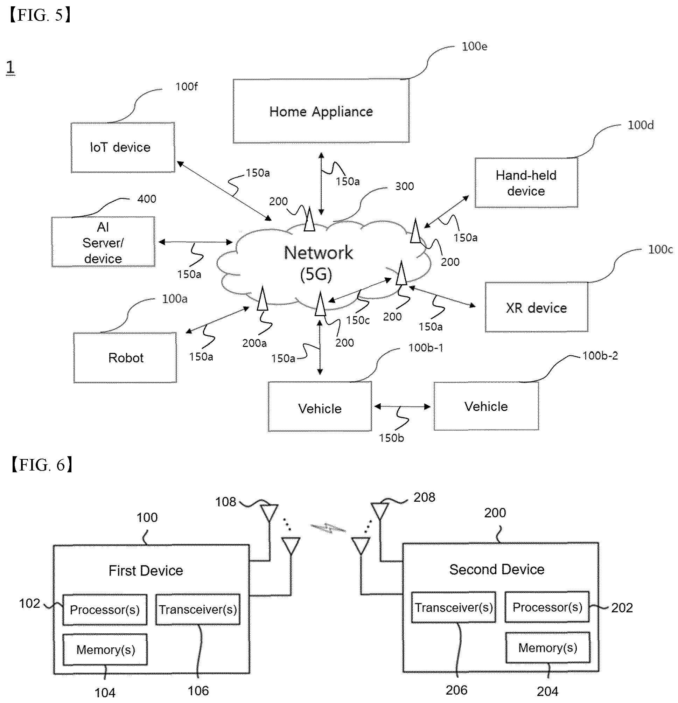

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

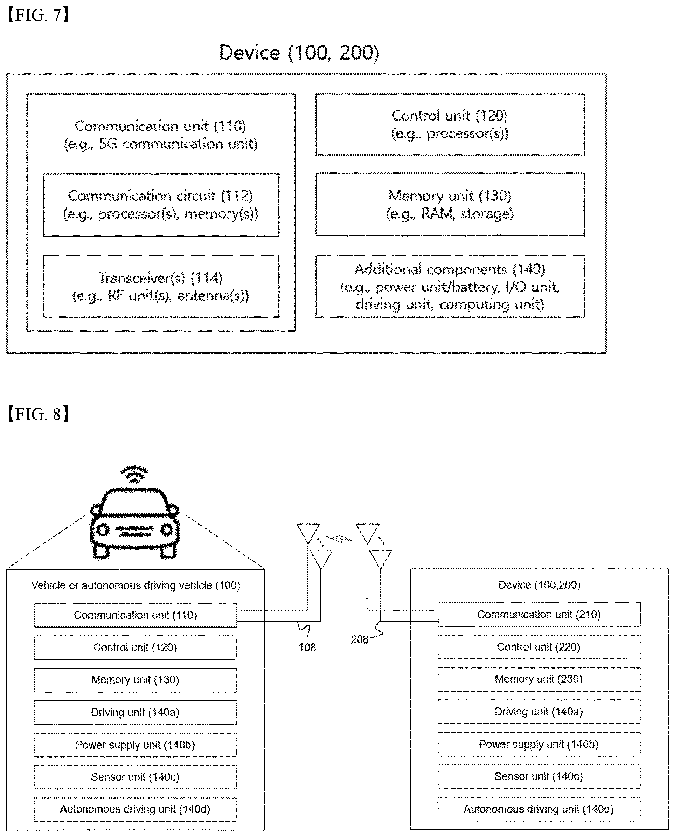

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

As described above, the present disclosure is applicable to various wireless communication systems

**Claims**

1. A method of transmitting and receiving signals by a user equipment (UE) in a wireless communication system, the method comprising:

   configuring one or more scheduled cell sets based on a radio resource control (RRC) parameter;
   receiving downlink control information (DCI) used for scheduling of multiple channels in multiple cells with one channel per cell, the DCI including information indicating a specific scheduled cell set among the one or more scheduled cell sets; and
   transmitting or receiving the multiple channels on all or part of cells included in the specific scheduled cell set.

2. The method of claim 1, wherein the DCI further includes information indicating the all or part of the cells for the transmitting or receiving of the multiple channels among the cells included in the specific scheduled cell set.

3. The method of claim 1, wherein the number of times of blind decoding for the DCI is counted based on a specific cell among the cells included in the scheduled cell set.

4. The method of claim 1, wherein DCI size alignment for the DCI is performed based on a specific cell among the cells included in the scheduled cell set.

5. The method of claim 1, wherein, based on the DCI and second DCI indicating the same specific scheduled cell set, the same search space set is configured for the DCI and the second DCI even when the DCI and second DCI indicate different combinations of cells among the cells included in the specific scheduled cell set.

6. A user equipment (UE) for transmitting and receiving signals in a wireless communication system, comprising:

   at least one transceiver;
   at least one processor; and
   at least one memory operatively connected to the at least one processor and storing instructions that, when executed, cause the at least one processor to perform specific operations,
   wherein the specific operations comprise:

   configuring one or more scheduled cell sets based on a radio resource control (RRC) parameter;
   receiving downlink control information (DCI) used for scheduling of multiple channels in multiple cells with one channel per cell, the DCI including information indicating a specific scheduled cell set among the one or more scheduled cell sets; and
transmitting or receiving the multiple channels on all or part of cells included in the specific scheduled cell set.

7. The UE of claim 6, wherein the DCI further includes information indicating the all or part of the cells for the transmitting or receiving of the multiple channels among the cells included in the specific scheduled cell set.

8. The UE of claim 6, wherein the number of times of blind decoding for the DCI is counted based on a specific preconfigured cell among the cells included in the scheduled cell set.

9. The UE of claim 6, wherein DCI size alignment for the DCI is performed based on a specific preconfigured cell among the cells included in the scheduled cell set.

10. The UE of claim 6, wherein, based on the DCI and second DCI indicating the same specific scheduled cell set, the same search space set is configured for the DCI and the second DCI even when the DCI and second DCI indicate different combinations of cells among the cells included in the specific scheduled cell set.

11. An apparatus for a user equipment (UE), comprising:

at least one processor; and
at least one computer memory operatively connected to the at least one processor and storing instructions that, when executed, cause the at least one processor to perform operations, the operations comprising:

configuring one or more scheduled cell sets based on a radio resource control (RRC) parameter;
receiving downlink control information (DCI) used for scheduling of multiple channels in multiple cells with one channel per cell, the DCI including information indicating a specific scheduled cell set among the one or more scheduled cell sets; and
transmitting or receiving the multiple channels on all or part of cells included in the specific scheduled cell set.

12. A non-volatile computer-readable storage medium including at least one computer program that causes at least one processor to perform operations, the operations comprising:

configuring one or more scheduled cell sets based on a radio resource control (RRC) parameter;
receiving downlink control information (DCI) used for scheduling of multiple channels in multiple cells with one channel per cell, the DCI including information indicating a specific scheduled cell set among the one or more scheduled cell sets; and
transmitting or receiving the multiple channels on all or part of cells included in the specific scheduled cell set.

13. A method of transmitting and receiving signals by a base station (BS) in a wireless communication system, the method comprising:

transmitting a radio resource control (RRC) parameter for configuring one or more scheduled cell sets;
transmitting downlink control information (DCI) used for scheduling of multiple channels in multiple cells with one channel per cell, the DCI including information indicating a specific scheduled cell set among the one or more scheduled cell sets; and
transmitting or receiving the multiple channels on all or part of cells included in the specific scheduled cell set.

14. A base station for transmitting and receiving signals in a wireless communication system, comprising:

at least one transceiver;
at least one processor; and
at least one memory operatively connected to the at least one processor and storing instructions that, when executed, cause the at least one processor to perform specific operations,
wherein the specific operations comprise:

configuring one or more scheduled cell sets based on a radio resource control (RRC) parameter;
receiving downlink control information (DCI) used for scheduling of multiple channels in multiple cells with one channel per cell, the DCI including information indicating a specific scheduled cell set among the one or more scheduled cell sets; and
transmitting or receiving the multiple channels on all or part of cells included in the specific scheduled cell set.

【FIG. 1】

· · · · · · One Frame (10ms) · · · · · ·

· · · · · · Half-Frame (5ms) | Half-Frame (5ms) · · · · · ·

· · · · · · Subframe 0 (1ms) · · · · · · Subframe 4 (1ms) | Subframe 5 (1ms) · · · · · · Subframe 9 (1ms) · · · · · ·

Subframe (1ms)

| 15KHz | Slot (14 symbols) |

1ms

| 30KHz | Slot 0 (14 symbols) | Slot 1 |

500us

| 60KHz | Slot 0 (14 symbols) | Slot 1 | Slot 2 | Slot 3 |

250us

| 120KHz | Slot 0 (14 symbols) | Slot 1 | Slot 2 | Slot 3 | Slot 4 | Slot 5 | Slot 6 | Slot 7 |

125us

【FIG. 2】

Resource grid

A carrier
(up to 3300 subcarriers, i. e., 275 RBs)

A BWP

1 RB = 12 subcarriers

1 RE

1 subcarrier

1 symbol

l = 0 · · · ·

k = 0

【FIG. 3】

【FIG. 4】

【FIG. 5】

1

【FIG. 6】

【FIG. 7】

## Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【FIG. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

# EP 4 572 494 A1

## INTERNATIONAL SEARCH REPORT

| | International application No. |
|---|---|
| | **PCT/KR2023/011127** |

**A.  CLASSIFICATION OF SUBJECT MATTER**

**H04W 72/23**(2023.01)i; **H04L 5/00**(2006.01)i; **H04L 1/00**(2006.01)i

According to International Patent Classification (IPC) or to both national classification and IPC

**B.  FIELDS SEARCHED**

Minimum documentation searched (classification system followed by classification symbols)

H04W 72/23(2023.01); H04W 24/08(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RRC, scheduled cell set, DCI, specific scheduled cell set, partial, all cells

**C.  DOCUMENTS CONSIDERED TO BE RELEVANT**

| Category* | Citation of document, with indication, where appropriate, of the relevant passages | Relevant to claim No. |
|---|---|---|
| X Y A | CMCC. Discussion on multi-cell PUSCH/PDSCH scheduling with a single DCI. R1-2204324, 3GPP TSG RAN WG1 Meeting #109-e. 29 April 2022. <br> See sections 2-2.3.2; and table 1. | 1,3-4,6,8-9,11-14 <br> 2,7 <br> 5,10 |
| Y | CHINA TELECOM. Discussion on multi-cell scheduling with a single DCI. R1-2203664, 3GPP TSG RAN WG1 Meeting #109-e. 29 April 2022. <br> See section 2; and figures 1-2. | 2,7 |
| A | SAMSUNG. Multi-cell PUSCH/PDSCH scheduling with a single DCI. R1-2203925, 3GPP TSG RAN WG1 Meeting #109-e. 29 April 2022. <br> See sections 2-5. | 1-14 |
| A | NOKIA et al. On multi-cell PUSCH/PDSCH scheduling with a single DCI. R1-2203276, 3GPP TSG RAN WG1 Meeting #109-e. 29 April 2022. <br> See sections 3-3.4. | 1-14 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 November 2023** | **09 November 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011127** |

### C. DOCUMENTS CONSIDERED TO BE RELEVANT

| Category* | Citation of document, with indication, where appropriate, of the relevant passages | Relevant to claim No. |
| --- | --- | --- |
| A | US 2021-0329677 A1 (ASUSTEK COMPUTER INC.) 21 October 2021 (2021-10-21) <br> See paragraphs [0507]-[0670]; and figures 5-9. | 1-14 |

Form PCT/ISA/210 (second sheet) (July 2022)

**INTERNATIONAL SEARCH REPORT**
Information on patent family members

International application No.

**PCT/KR2023/011127**

| Patent document cited in search report | Publication date (day/month/year) | Patent family member(s) | | Publication date (day/month/year) |
|---|---|---|---|---|
| US 2021-0329677 A1 | 21 October 2021 | CN 113543292 | A | 22 October 2021 |
| | | EP 3907919 | A2 | 10 November 2021 |
| | | EP 3907919 | A3 | 19 January 2022 |
| | | KR 10-2021-0128345 | A | 26 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical channels and modulation. *38.211*
- Multiplexing and channel coding. *38.212*
- Physical layer procedures for control. *38.213*
- Physical layer procedures for data. *38.214*
- NR and NG-RAN Overall Description. *38.300*